# EUROPÄISCHE PATENTSCHRIFT

(11) **EP 1 692 929 B1**
(45) Veröffentlichungstag und Bekanntmachung des Hinweises auf die Patenterteilung: **28.11.2007**
(21) Anmeldenummer: 06002698.6
(22) Anmeldetag: 10.02.2006
(51) Int. Cl.: A01C 17/00, A01B 79/00

(54) **Verfahren zum Steuern und/oder Regeln von landwirtschaftlichen Schleuderdüngerstreuern**
Method for regulating and/or controlling agricultural centrifugal fertilizer spreaders
Procédé de commande et/ou contrôle pour épandeur centrifuge d'engrais

(30) Priorität: 16.02.2005 DE 102005007177
(43) Veröffentlichungstag der Anmeldung: 23.08.2006
(73) Patentinhaber: Amazonen-Werke H. Dreyer GmbH & Co. KG, 49205 Hasbergen (DE)
(72) Erfinder: Marquering, Johannes, Dr.Dipl.-Ing., 49176 Borgloh (DE); Scheufler, Bernd, Dr.Ing., 49205 Hasbergen (DE)

(56) Entgegenhaltungen:
- EP-A- 0 726 024
- EP-A- 0 761 084
- US-A- 5 077 653

## Beschreibung

Die Erfindung betrifft ein Verfahren gemäß des Oberbegriffes des Patentanspruches 1.

Ein derartiges Verfahren ist in der EP 07 26 024 A1 beschrieben. Bei diesem Verfahren werden an bestimmten Stellen die Dosierorgane automatisch ein- und ausgeschaltet, um eine Überdüngung am Vorgewende zu vermeiden. Es ist in dieser Druckschrift nicht beschrieben, wie diese Punkte - festgelegt worden sind.

Ein weiteres Verfahren ist in der EP 0 761 084 A1 beschrieben. Bei diesem Schleuderdüngerstreuer kann unter zu Hilfenahme eines Positionsgebers in Verbindung mit abgespeicherten Felddaten der Öffnungs- und Schließvorgang der Dosierorgane eines Schleuderdüngerstreuers unter Berücksichtigung der Überlappung am Vorgewende mit entsprechenden Vorgaben in der Feldkarte durchgeführt werden.

Der Erfindung liegt die Aufgabe zugrunde, die Ein- und Ausschaltpunkte für die Dosierorgane möglichst exakt vorzubestimmen.

Diese Aufgabe wird erfindungsgemäß durch die kennzeichnenden Merkmale des Patentanspruches 1 gelöst. Der den Schaltpunkt zum Ein- und Ausschalten bestimmende Abstand der Begrenzungslinie zwischen Vorgewende und Feldinneren und dem erforderlichen Ein- und Ausschaltpunkt der Dosierorgane wird hierdurch festgelegt. Weiterhin wird aufgrund der im Speicher hinterlegten Ein- und Ausschaltzeitpunkte zum Schalten der Dosierorgane eines Schleuderdüngerstreuers eine zumindest annähernd und gleichmäßige bzw. optimierte Düngerverteilung in dem Grenzbereich zwischen dem Vorgewende und dem Feldinneren erreicht. In Abhängigkeit der Ausdehnung der dreidimensionalen Streufächer, die entsprechend überlappt werden, um eine gleichmäßig optimierte Düngerverteilung zu erreichen, werden die Schaltzeitpunkte festgelegt und im Speicher des Bordcomputers abgespeichert. Die dreidimensionale Ausdehnung des Streufächers setzt sich durch die flächige Ausdehnung des Streufächers und die im Streufächer enthaltene Düngermenge zusammen. Die Ein- und Ausschaltpunkte zum Schalten der Dosierorgane ergeben sich durch die Überlappungen der dreidimensionalen Streufächer durch die Hin- und Herfahrt bei den benachbarten Streubahnen im Feldinneren und durch den bei der Querfahrt im Vorgewende entstehenden Streufächer.

Um die optimierte Düngerverteilung zu erreichen ist vorgesehen, dass die Einschaltpunkte zum Einschalten der Dosierorgane beim Fahren vom Vorgewende in das Feldinnere in einem Abstand zur Begrenzungslinie zwischen Vorgewende und Feldinneren im Feldinneren liegen, und dass die Ausschaltpunkte zum Ausschalten der Dosierorgane beim Fahren vom Feldinneren in das Vorgewende in einem Abstand hinter der Begrenzungslinie zwischen Vorgewende und Feldinneren im Vorgewende liegen.

Um je nach gefahrener Geschwindigkeit von dem Bordcomputer aus die Stellelemente der Dosierorgane zum richtigen Zeitpunkt anzusteuern, damit der Streufächer an der richtigen Stelle beginnt bzw. beendet wird, um die geforderte gleichmäßige bzw. optimierte Düngerverteilung im Grenzbereich zwischen Vorgewende und Feldinneren sicherzustellen, ist vorgesehen, dass in dem Speicher des Bordcomputers ein Programm hinterlegt ist, welches geschwindigkeitsabhängige Totzeiten berücksichtigt, um die Dosierorgane über die Stellelemente zum richtigen Zeitpunkt ein- oder ausschalten damit der Streufächer zum festgelegten Abstand zur Begrenzungslinie entsteht oder beendet ist.

Um entsprechend der Feldkontur die jeweiligen Stellelemente der Dosierorgane entsprechend anzusteuern, damit in optimierter Weise eine gleichmäßige Düngerverteilung erreicht wird, ist vorgesehen, dass die Stellelemente der Dosierorgane entsprechend des Verlaufes der Begrenzungslinie zwischen Vorgewende und Feldinneren zur Fahrtrichtung des Düngerstreuers und/oder Fahrgassen von dem Bordcomputer geschaltet werden.

Hierbei ist vorgesehen, dass für das Schalten der Stellelemente der Dosierorgane der Winkel und/oder die Kontur der Begrenzungslinie zwischen Vorgewende und Feldinneren berücksichtigt wird, wobei die Stellelemente Dosierorgane gleichzeitig und/oder nacheinander entsprechend angesteuert werden. Somit ist es möglich, das zunächst nur ein Dosierorgan entsprechend ein- oder ausgeschaltet wird, und das andere zeitlich verzögert danach ein- wird oder entsprechend ausgeschaltet wird.

Weitere Einzelheiten der Erfindung sind der Beispielsbeschreibung und den Zeichnungen zu entnehmen. Hierbei zeigen
- Fig. 1: ein zu bestreuendes Feld in schematischer Darstellungsweise mit angelegten Fahrgassen und dem System zum Bestreuen des Feldes mit Dünger durch einen Schleuderdüngerstreuer,
- Fig. 2: die Situation am Feldende in Teilansicht und vergrößertem. Maßstab und
- Fig. 3: die Überlappungssituation im Grenzbereich zwischen dem Vorgewende und dem Feldinneren.

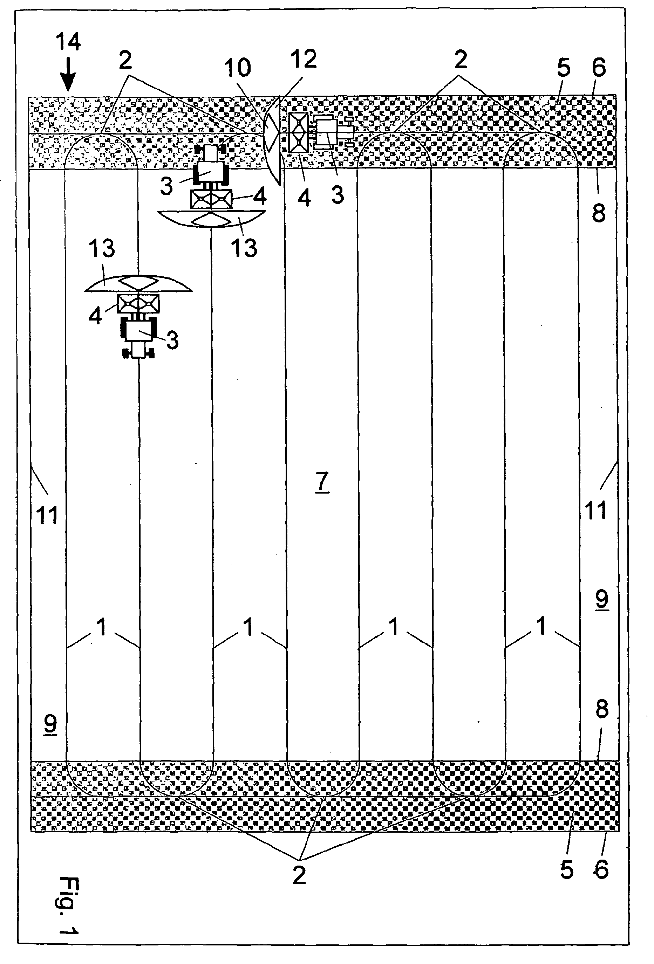

Die Fig. 1 zeigt sind, wie durch die Linien in schematischer Darstellung dargestellt ist, in dem zu bestreuenden Feldbereich die Fahrgassen 1 angelegt. Des weiteren sind die einzelnen Fahrgassen mittels Halbkreisen 2 miteinander verbunden, die den Fahrweg des Schleppers 3 mit dem Schleuderdüngerstreuer 4 beim Wendevorgang darstellen sollen. Die schraffierte Fläche 5 beim jeweiligen Feldende 6 ist das sog. Vorgewende, während die Fläche 7 zwischen den beiden Vorgewendestreifen 5 als Feldinneres bezeichnet wird. Zwischen dem Feldinneren 7 und dem Vorgewende 5 befindet sich jeweils die Begrenzungslinie 8, die im Folgenden als Begrenzungslinie 8 zwischen Vorgewende 5 und Feldinneren 7 bezeichnet wird. Das Vorgewende 5 und die Längsseitenstreifen 9 des Feldinneren werden mit einem Streufächer 10, der auf der dem Feldende 6 bzw. Feldrand 11 zugewandten Seite eine steil abfallende Streuflanke 12 aufweist abgestreut, so dass kein Dünger oder nur Dünger im geringfügigen Maße über die Feldrandgrenze von dem Schleuderdüngerstreuer gestreut wird. Zur feldinneren Seite wird beim Bestreuen des Vorgewendes 5 oder der Grenzstreifen 9 von dem Schleuderdüngerstreuer der Dünger in überlappender Weise abgeschleudert.

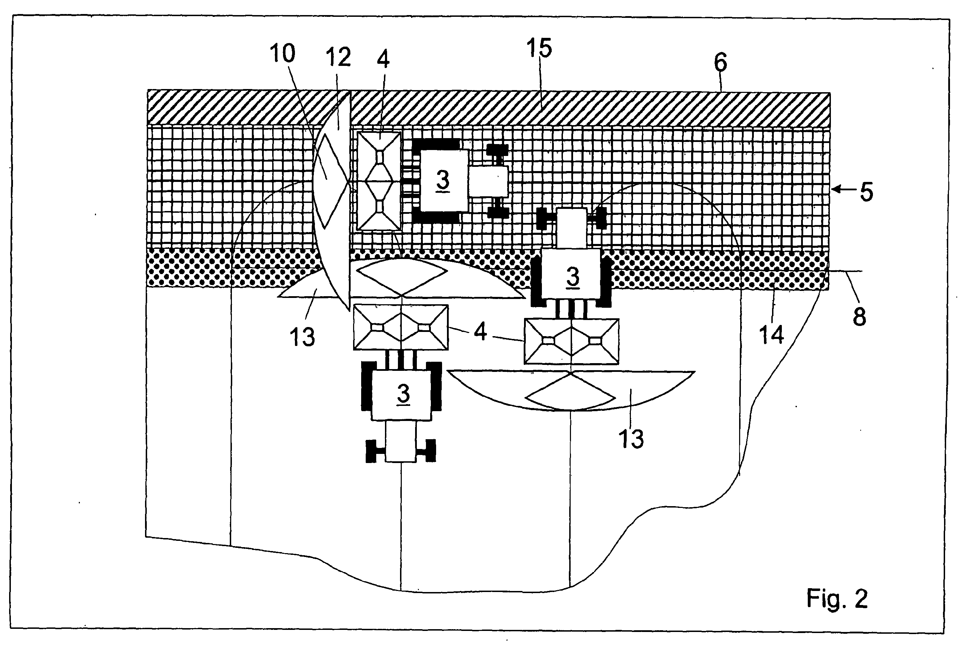

Wie bereits erwähnt, wird mit einem Schleuderdüngerstreuer 4, der im Ausführungsbeispiel an dem Dreipunktkraftheber eines Ackerschleppers 3 angebaut ist, der auf dem Acker zu verteilende Dünger verteilt. Der Schleuderdüngerstreuer kann auch als an einem Ackerschlepper angehängter gezogener Düngerstreuer ausgebildet sein. Der Schleuderdüngerstreuer 4 weist einen Vorratsbehälter auf, von dem aus über die mittels motorischen Einstellelementen einstellbaren Dosierorgane den unterhalb der Dosierorgane angeordneten und rotierend angetriebenen Schleuderscheiben in einstellbaren Mengen zugeführt. Die Schleuderscheiben verteilen die ihnen zugeführten Düngemittel in Breitverteilung in sich überlappenden Streufächern 10 bzw. 13, wie in den Fig. 1 bis 3 angedeutet ist, zumindest annähernd gleichmäßig auf der Bodenoberfläche.

Das Bestreuen des Vorgewendes 5 bzw. der Feldrandstreifen 9 kann vor dem Bestreuen des Feldinneren 7 oder anschließend erfolgen. Entscheidend ist die richtige Überlappung der Streufächer 10 und 13 im Übergangsbereich 14 zwischen dem Vorgewende 5 und dem Feldinneren 7 im Bereich der Begrenzungslinie 8 zwischen dem Vorgewende und dem Feldinneren 7. Hierzu ist es erforderlich, dass die Düngerzufuhr über die mittels motorischer Stellelemente einstellbaren Dosierorgane im Übergangsbereich 14 zwischen dem Vorgewende 5 und dem Feldinneren 7 im Bereich der Begrenzungslinie 8 richtig ein- und abgeschaltet werden.

Der Schleuderdüngerstreuer 4 bzw. der den Schleuderdüngerstreuer 4 tragende Schlepper 3 ist mit einem Bordcomputer, welches ein Standortbestimmungssystem, beispielsweise GPS- oder DGPS-System aufweist, ausgestattet. Mittels des Bordcomputers können die Stellelemente zum ein- und ausschalten der Dosierorgane entsprechend angesteuert werden.

Des weiteren sind in dem Speicher des Bordcomputers eine Applikationskarte sowie Felddaten hinterlegt. Hierbei ist auch die Lage der Fahrgassen 1, die Lage und Größe des Vorgewendes 5, die Form des Feldes, die Kontur, sowie der Winkel der Begrenzungslinie 8 zu den Fahrgassen 1 im Feldinneren 7 hinterlegt.

Mittels des Standortbestimmungssystems kann der Standort des Schleuderdüngerstreuers 4 bzw. des Ackerschleppers 3 auf dem Feld in Echtzeit ermittelt werden.

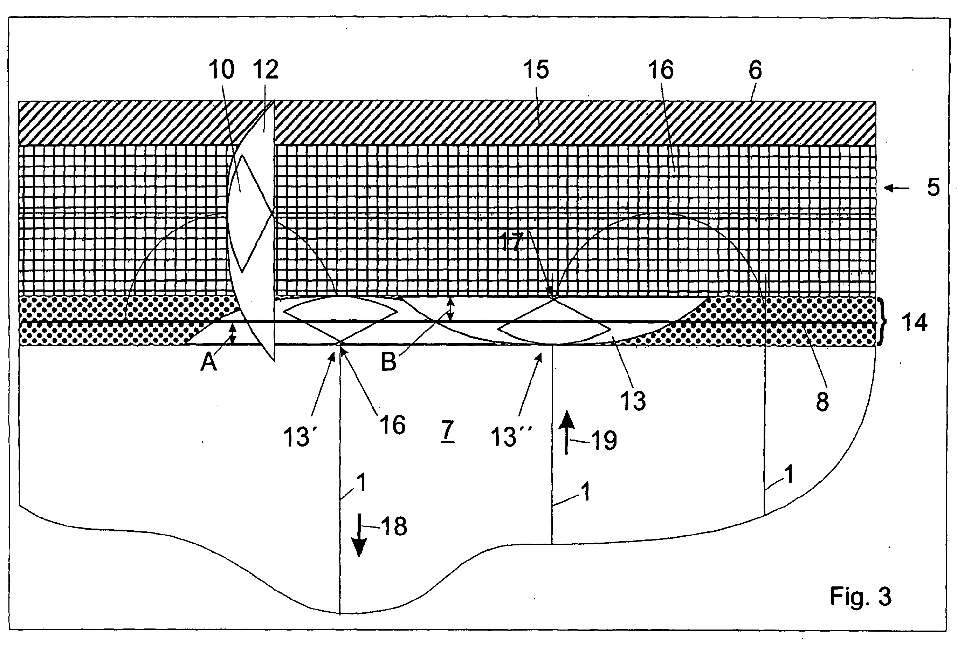

In Fig. 3 sind die Anfangs- 13' und Endpositionen 13" des Streufächers 13, an welchem durch entsprechendes Ansteuern von dem Bordcomputer die Dosierorgane den Schleuderscheiben rechtzeitig das Düngemittel zuführt und abgeschaltet wird, so dass die Streufächer 13 an den in Fig. 3 eingezeichneten Positionen 13' und 13" entstehen, die Festlegung dieser Positionen 13' und 13" wird später noch erläutert. In der Fig. 3 werden durch die unterschiedlichen Schraffuren die Stärke der Düngermittelverteilung dargestellt. Zum Feldende 6 im Vorgewende 5 ist ein unterdüngter Bereich 14, der durch die Vorschriften des Grenz- oder Randstreuens gemäß Düngemittelverordnung vorgegeben ist. Hier entsteht also ein unterdüngter Streifen 15. Im Bereich der Begrenzungslinie 8 befindet sich ein Streifen mit einem über- oder unterdüngten Bereich 14, jedoch angenähert an die gleichmäßige Düngerverteilung, wie sie im Feldinneren 7 oder im Bereich 16 zwischen dem Grenzstreifen 15 und dem Übergangsbereich 14 zwischen dem Vorgewende 5 und dem Feldinneren 7 bestehen.

Auf der Grundlage der in Streuversuchen ermittelten Düngerverteilung innerhalb des Streufächers 10, 13, wird durch Streuversuche oder durch ein Optimierungsprogramm bzw. Simulationsprogramm auf einem Rechner der Abstand A, B zwischen der Begrenzungslinie 8 zwischen dem Vorgewende 5 und Feldinneren 7 und dem Ein- 16 und Ausschaltpunkt 17 der Dosierorgane durch ein Optimierungsverfahren durch Überlappen der Streufächer 10, 13 vom benachbarten Hin- und Herfahrten und der Vorgewendefahrt zur optimalen Überlappung zur Erreichung einer zumindest annähernd gleichmäßigen Düngerverteilung im Vorgewendebereich 14 ermittelt. Hierbei liegen die Einschaltpunkte 16 zum Einschalten der Dosierorgane beim Fahren vom Vorgewende 5 in das Feldinnere 7, wie durch den Pfeil 18 angedeutet, in ein Abstand A zur Begrenzungslinie 8 zwischen Vorgewende 5 und dem Feldinneren 7 und die Ausschaltpunkte 17 zum Ausschalten der Dosierorgane beim Fahren vom Feldinneren 7 in das Vorgewende 5, wie durch den Pfeil angedeutet, in einem Abstand B hinter der Begrenzungslinie 8 zwischen Vorgewende 5 und Feldinneren 7 im Vorgewende 5.

Des weiteren ist in dem Speicher des Bordcomputers ein Programm hinterlegt, welches geschwindigkeitsabhängige Schaltzeiten berücksichtigt, um die Dosierorgane über die Stellorgane zum richtigen Zeitpunkt ein- oder auszuschalten, damit der Streufächer 13 zum festgelegten Abstand A, B zur Begrenzungslinie 8 entsteht oder beendet ist, wie in Fig. 3 dargestellt ist. Falls die Begrenzungslinie 8 zum Vorgewende 5 nicht rechtwinklig zu den Fahrgassen 1 im Feldinneren 7 verläuft müssen die Stellelemente der Dosierorgane entsprechend dem Verlauf der Begrenzungslinie 8 bzw. des Winkels oder der Kontur der Begrenzungslinie 8 gesteuert werden, so dass sie dann nacheinander entsprechend angesteuert werden. Wie in dem Ausführungsbeispiel gemäß Fig. 3 dargestellt, werden die Stellelemente beider Dosierorgane für beide Schleuderscheiben von dem Bordcomputer gleichzeitig angesteuert.

## Patentansprüche

1. Verfahren zum Steuern und/oder Regeln von landwirtschaftlichen Schleuderdüngerstreuern (4) mit zumindest zwei rotierend angetriebenen Schleuderscheiben, denen die auszubringenden Düngemittel über mittels motorischer Stellelemente einstellbaren Dosierorganen zugeführt werden und die Düngemittel in Breitverteilung in sich überlappenden Streufächern (10,13) zumindest annähernd gleichmäßig auf der Bodenoberfläche verteilen, wobei mittels eines ein Standortbestimmungssystem aufweisenden Bordcomputers die Stellelemente zum Ein- und Ausschalten der Dosierorgane ansteuerbar sind, wobei der Bordcomputer aufgrund der abgespeicherten Felddaten in Verbindung mit dem Standortbestimmungssystem unter Berücksichtigung der Überlappung der von den Schleuderscheiben durch das Abschleudern der Düngemittel erzeugten Streufächer (10,13) am Vorgewende (5) und mit entsprechenden Vorgaben in den abgespeicherten Felddaten die Dosierorgane ein- oder ausgeschaltet werden, wobei in dem Speicher des Bordcomputers, bezogen auf die Begrenzungslinie (8) zwischen Vorgewende (5) und Feldinneren (7), die Ein- (16) und Ausschaltpunkte (17) zum Schalten der Dosierorgane zur Erreichung einer zumindest annähernd gleichmäßigen und/oder optimierten Düngerverteilung im Grenzbereich (14) zwischen Vorgewende (5) und Feldinneren (7) hinterlegt sind, **dadurch gekennzeichnet, dass** der Abstand (A, B) zwischen der Begrenzungslinie (8) zwischen Vorgewende (5) und Feldinneren (7) und den Ein- oder Ausschaltpunkten (16, 17) der Dosierorgane durch ein Optimierungsverfahren durch Überlappen der Streufächer (10, 13) von benachbarten Hin- und Herfahrten und der Vorgewendefahrt zur optimalen Überlappung zur Erreichung einer zumindest annähernd gleichmäßigen Düngerverteilung im Vorgewendebereich (5, 14) ermittelt ist.

2. Verfahren nach Anspruch 1, **dadurch gekennzeichnet, dass** die Einschaltpunkte (16) zum Einschalten der Dosierorgane beim Fahren vom Vorgewende (5) in das Feldinnere (7) in einem Abstand (A) zur Begrenzungslinie (8) zwischen Vorgewende (5) und Feldinneren (6) im Feldinneren (7) liegen, und dass die Ausschaltpunkte (17) zum Ausschalten der Dosierorgane beim Fahren vom Feldinneren (7) in das Vorgewende (5) in einem Abstand (B) hinter der Begrenzungslinie (8) zwischen Vorgewende (5) und Feldinneren (7) im Vorgewende (6) liegen.

3. Verfahren nach Anspruch 1, **dadurch gekennzeichnet, dass** in dem Speicher des Bordcomputers ein Programm hinterlegt ist, welches geschwindigkeitsabhängige Todzeiten berücksichtigt, um die Dosierorgane über die Stellelemente zum richtigen Zeitpunkt ein- oder ausschalten damit der Streufächer zum festgelegten Abstand (A, B) zur Begrenzungslinie (8) entsteht oder beendet ist.

4. Verfahren nach einen oder mehreren der vorstehenden Ansprüche, **dadurch gekennzeichnet, dass** die Stellelemente der Dosierorgane entsprechend des Verlaufes der Begrenzungslinie (8) zwischen Vorgewende (5) und Feldinneren (7) zur Fahrtrichtung des Düngerstreuers und/oder Fahrgassen von dem Bordcomputer geschaltet werden.

5. Verfahren nach Anspruch 4, **dadurch gekennzeichnet, dass** die Kontur für das Schalten der Stellelemente der Dosierorgane der Winkel und/oder die Kontur der Begrenzungslinie zwischen dem Vorgewende (5) und dem Feldinneren (7) berücksichtigt wird, wobei die Stellelemente der Dosierorgane gleichzeitig und/oder im nacheinander entsprechend angesteuert werden.

## Claims

1. Method for controlling and/or regulating agricultural centrifugal fertiliser spreaders (4) with at least two rotatingly driven centrifugal discs, the fertiliser to be broadcast being supplied to the said centrifugal discs via metering members that are adjustable by means of motor-driven control members and the said centrifugal discs distributing the fertiliser material at least approximately evenly on the surface of the ground in wide distribution in over-lapping broadcasting compartments (10, 13), wherein by means of an on-board computer that includes a position defining system, the control members can be activated to switch the metering members on and off, wherein the on-board computer switches the metering members on and off on account of the stored field data in conjunction with the position defining system, with consideration to the overlapping of the broadcasting compartments (10, 13), created by the centrifugal discs by the centrifuging of the fertiliser, at the turn space (5) and with corresponding defaults in the stored field data, wherein, with reference to the boundary line (8) between turn space (5) and field interior (7), the switching-on point (16) and switching-off point (17) are stored in the memory of the on-board computer for switching the metering members to obtain an at least approximately even and/or optimised fertiliser distribution in the boundary region (14) between turn space (5) and field interior (7), **characterised in that** the distance (A, B) between the boundary line (8) between turn space (5) and field interior (7) and the switching-on point and switching-off point (16, 17) of the metering members is determined by means of an optimising procedure by overlapping the broadcasting compartments (10, 13) when moving adjacently back and forth and in the turn space for optimum overlapping to achieve an at least approximately even fertiliser distribution in the region of the turn space (5, 14).

2. Method according to claim 1, **characterised in that** the switching-on points (16) for switching on the metering members when travelling from the turn space (5) into the field interior (7) are at a distance (A) from the boundary line (8) between turn space (5) and field interior (6) in the field interior (7), and **in that** the switching-off points(17) for switching off the metering members when travelling from the field interior (7) into the turn space (5) are at a distance (B) behind the boundary line (8) between turn space (5) and the field interior (7) in the turn space (6).

3. Method according to claim 1, **characterised in that** the memory of the on-board computer includes a program, which takes into account speed-dependent dead times in order to switch the metering members on or off at the correct time by means of the control members so that the broadcasting compartment is created or finished at an established distance (A, B) from the boundary line (8).

4. Method according to one or more of the preceding claims, **characterised in that** the control members of the metering members are switched by the on-board computer according to the course of the boundary line (8) between turn space (5) and field interior (7) relative to the direction of travel of the fertiliser spreader and/or tramlines.

5. Method according to claim 4, **characterised in that**, for the switching of the control members of the metering members, the contour, the angle and/or the contour of the boundary line between the turn space (5) and the field interior (7) is taken into account, wherein the control members of the metering members are activated in a corresponding manner simultaneously and/or successively.

## Revendications

1. Procédé de commande et/ou de régulation d'épandeurs centrifuge d'engrais (4) à usage agricole comportant au moins deux disques d'épandage entraînés en rotation qui reçoivent les engrais à distribuer par l'intermédiaire d'organes de dosage réglables à l'aide d'éléments d'actionnement à moteur et l'engrais est distribué selon une distribution en largeur suivant des cônes d'épandage (10, 13) qui se chevauchent, suivant une distribution au moins sensiblement régulière à la surface du terrain,
selon lequel, à l'aide d'un ordinateur de bord équipé d'un système de localisation, on commande les éléments d'actionnement pour brancher et couper les organes de dosage,
à partir des données du champ, mémorisées, en liaison avec le système de localisation et en tenant compte du chevauchement des cônes d'épandage (10, 13) généré par les disques d'épandage expulsant de l'engrais, on détermine au niveau de la zone de retournement (5) et avec les consignes correspondantes dans les données de champ mémorisées, la coupure ou le branchement des organes de dosage,
dans la mémoire de l'ordinateur de bord, rapportée à la ligne-limite (8) séparant la zone de retournement (5) et l'intérieur (7) du champ, on enregistre les points de branchement (16) et de coupure (17) pour commuter les organes de dosage et obtenir une distribution d'engrais au moins sensiblement régulière et/ou optimisée dans la zone-limite (14) comprise entre la zone de retournement (5) et l'intérieur du champ (7),
**caractérisé en ce qu'**
on détermine la distance (A, B) entre la ligne-limite (8) comprise entre la zone de retournement (5) et l'intérieur du champ (7) et les points de branchement ou de coupure (16, 17) des organes de dosage par un procédé d'optimisation par chevauchement des cônes d'épandage (10, 13) de trajets aller et retour voisins et pour le trajet aller, pour avoir un chevauchement optimum, on détermine une distribution d'engrais au moins sensiblement régulière dans la zone de retournement (5, 14).

2. Procédé selon la revendication 1,
**caractérisé en ce que**
les points de branchement (16) pour brancher les organes de dosage lors du passage de la zone de retournement (5) vers l'intérieur du champ (7) se situent à une distance (A) de la ligne-limite (8) entre la zone de retournement (5) et l'intérieur du champ (6), du côté intérieur du champ (7) et les points de coupure (17) pour couper les organes de dosage lors du passage de l'intérieur du champ (7) vers la zone de retournement (5) se situent à une distance (B) derrière la ligne de référence (8) comprise entre la zone de retournement (5) et l'intérieur du champ (7) du côté de la zone de retournement (5).

3. Procédé selon la revendication 1,
**caractérisé en ce que**
la mémoire de l'ordinateur de bord contient un programme qui tient compte des temps morts dépendant de la vitesse pour brancher ou couper les organes de dosage à l'instant correct par les éléments d'actionnement, pour former ou terminer le cône d'épandage à la distance fixée (A, B) par rapport à la ligne de référence (8).

4. Procédé selon l'une quelconque des revendications précédentes,
**caractérisé en ce que**
les éléments d'actionnement des organes de dosage sont commutés en fonction du tracé de la ligne-limite (8) comprise entre la zone de retournement (5) et l'intérieur (7) du champ, par rapport à la direction de déplacement de l'épandeur d'engrais et/ou des voies de passage, à partir de l'ordinateur de bord.

5. Procédé selon la revendication 4,
**caractérisé en ce qu'**
on tient compte du contour pour couper les éléments d'actionnement des organes de dosage, de l'angle et/ou du contour de la ligne-limite séparant la zone de retournement (5) et l'intérieur (7) du champ, les éléments d'actionnement commandant les organes de dosage simultanément et/ ou l'un après l'autre.
